(19) Europäisches Patentamt / European Patent Office / Office européen des brevets

(11) **EP 4 328 009 B1**

(12) **EUROPEAN PATENT SPECIFICATION**

(45) Date of publication and mention
of the grant of the patent:
**23.04.2025 Bulletin 2025/17**

(21) Application number: **21937966.6**

(22) Date of filing: **16.11.2021**

(51) International Patent Classification (IPC):
**B29C 64/295** (2017.01)  **B29C 35/04** (2006.01)
**B29C 71/00** (2006.01)  **B29C 71/02** (2006.01)
**C08J 3/24** (2006.01)  **B33Y 40/20** (2020.01)

(52) Cooperative Patent Classification (CPC):
**B29C 35/041; B29C 71/0009; B29C 71/02;**
**B33Y 40/20; C08J 3/24;** B29C 64/147;
B29C 64/153; B33Y 10/00; B33Y 70/00;
C08J 2307/00

(86) International application number:
**PCT/JP2021/042104**

(87) International publication number:
**WO 2022/224476 (27.10.2022 Gazette 2022/43)**

(54) **METHOD FOR PRODUCING CROSSLINKED RUBBER**

VERFAHREN ZUR HERSTELLUNG VON VERNETZTEM KAUTSCHUK

PROCÉDÉ DE PRODUCTION DE CAOUTCHOUC RÉTICULÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **23.04.2021 JP 2021073376**

(43) Date of publication of application:
**28.02.2024 Bulletin 2024/09**

(73) Proprietor: **BRIDGESTONE CORPORATION**
**Chuo-ku**
**Tokyo 104-8340 (JP)**

(72) Inventors:
• **OHSAWA, Yasuo**
**Tokyo 104-8340 (JP)**
• **KAGA, Norihiko**
**Tokyo 104-8340 (JP)**

(74) Representative: **Marks & Clerk LLP**
**15 Fetter Lane**
**London EC4A 1BW (GB)**

(56) References cited:
**WO-A1-2020/255442   JP-A- 2005 208 280**
**JP-A- 2019 019 324   JP-A- 2019 019 324**

**Description**

TECHNICAL FIELD

This disclosure relates to a method for producing a cross-linked rubber.

BACKGROUND

A formed object of cross-linked rubber is usually produced by fitting a formed object of uncross-linked rubber into a mold or by sandwiching them between heat presses, etc., within the temperature range in which the vulcanization reaction takes place, and by applying a certain amount of pressure to prevent the rubber composition from blowing and generating bubbles inside. However, these methods are difficult to apply to the formed object with a complex shape such as an additively fabricated object, and are easily accompanied by dimensional changes before and after vulcanization of the formed fabricated object.

In this regard, for example, PTL 1 discloses the composition of uncross-linked rubber composition suitable as a modeling material for 3D printers using the fused deposition modeling, as well as a method of vulcanizing this uncross-linked rubber composition by heating it to between 100°C and 150°C under normal pressure.

Further, for example, PTL 2 discloses a method of vulcanizing a curved tubular article made of elastomeric material or the like, having a predetermined three-dimensional meandering configuration, and a constant wall thickness and circular cross-sectional shape over its entire length.

CITATION LIST

Patent Literature

    PTL 1: JP 2019-19324 A1
    PTL 2: JP 2003-531038 A1

SUMMARY

(Technical Problem)

However, the vulcanization method disclosed in PTL 1 requires the preparation of an unvulcanized rubber composition having the component composition adapted to the technology written in PTL 1. Also, PTL 2 does not provide details of the vulcanization method, and does not disclose a method for producing a vulcanized rubber for the additively fabricated object with good dimensional accuracy and simplicity.

The subject of this disclosure is to provide a method for producing a cross-linked rubber for the additively fabricated object that can be easily produced with good dimensional accuracy and simplicity, even using a general-purpose uncross-linked rubber composition.

(Solution to Problem)

The inventors found that the above problem can be solved by heating the aforementioned additively fabricated object of uncross-linked rubber while controlling the pressure and temperature so as not to exceed the saturated vapor pressure of the liquid, obtaining the cumulative cross-linking degree by the Arrhenius formula according to the time history of the heating temperature, and stopping the cross-linking when the required cross-linking degree is reached. This disclosure is as follows.

    <1> A method for producing a cross-linked rubber, in which an additively fabricated object of uncross-linked rubber is heated in a liquid to produce an additively fabricated object of cross-linked rubber, wherein the method includes, heating said additively fabricated object of uncross-linked rubber within the range not exceeding the saturated vapor pressure by controlling the temperature and pressure of said liquid, obtaining the equivalent cross-linking amounts at regular intervals from the start of heating using the following Formula (1), accumulating them and calculating the cumulative cross-linking degree, and stopping the cross-linking reaction when the cross-linking degree of said additively fabricated object of cross-linked rubber reaches the required cross-linking degree.
    [Math. 1]

$$U = \sum_{i=1}^{n} \left\{ e^{-\frac{E}{R}\left(\frac{1}{T} - \frac{1}{T_0}\right)} \right\} \cdot \left( \frac{t^i}{t_0} \right) \qquad (1)$$

In the Formula (1);

U is the equivalent cross-linking amount,
E is the activation energy (kcal/mol),
R is the gas constant ($1.987 \times 10^{-3}$kcal/mod • deg),
T is the cross-linking temperature (K),
$T_0$ is the reference temperature (K),
$t_0$ is the time of optimum cross-linking reaction point, which was measured and determined in advance at the reference temperature $T_0$ (Sec),
t' is the cross-linking time at the i-th interval to be accumulated (Sec).

<2> The method for producing a cross-linked rubber according to <1>, including a pre-heating process in which said additively fabricated object of uncross-linked rubber is heated at or below the boiling point of said liquid under pressure of 1.1 MPa or more in advance.
<3> The method for producing cross-linked rubber according to <1> or <2>, wherein said liquid is water.

(Advantageous Effect)

According to this disclosure, it is possible to provide a method for producing cross-linked rubber for the additively fabricated object that can be easily produced with good dimensional accuracy and simplicity, even using a general-purpose uncross-linked rubber composition.

BRIEF DESCRIPTION OF THE DRAWINGS

In the accompanying drawings:

FIG. 1 illustrates the equivalent cross-linking curves for Examples 1 and 2;
FIG.2 illustrates the shape measurement results using laser shape mesurement of the additively fabricated object of uncross-linked rubber and the additively fabricated object of cross-linked rubber of Example 1;
FIG.3 illustrates the schematic drawing of one embodiment of sheet-like additively fabricated object; and
FIG.4 is a photograph of one embodiment of thread-like additively fabricated object.

DETAILED DESCRIPTION

<Method for producing cross-linked rubber>

The method for producing a cross-linked rubber according to this disclosure is: a method for producing a cross-linked rubber, in which an additively fabricated object of uncross-linked rubber is heated in a liquid to produce an additively fabricated object of cross-linked rubber, wherein the method includes,
heating said additively fabricated object of uncross-linked rubber within the range not exceeding the saturated vapor pressure by controlling the temperature and pressure of said liquid, obtaining the equivalent cross-linking amounts at regular intervals from the start of heating using the following Formula (1), accumulating them and calculating the cumulative cross-linking degree, and stopping the cross-linking reaction when the cross-linking degree of said additively fabricated object of cross-linked rubber reaches the required cross-linking degree.
[Math. 2]

$$U = \sum_{i=1}^{n} \left\{ e^{-\frac{E}{R}\left(\frac{1}{T} - \frac{1}{T_0}\right)} \right\} \cdot \left( \frac{t^i}{t_0} \right) \qquad (1)$$

In the Formula (1);

U is the equivalent cross-linking amount,
E is the activation energy (kcal/mol),
R is the gas constant ($1.987 \times 10^{-3}$kcal/mod • deg),
T is the cross-linking temperature (K),
$T_0$ is the reference temperature (K),
$t_0$ is the time of optimum cross-linking reaction point, which was measured and determined in advance at the reference temperature $T_0$ (Sec),
t' is the cross-linking time at the i-th interval to be accumulated (Sec).

As previously mentioned, the formed object of cross-linked rubber is generally cross-linked by placing the uncross-linked rubber in a mold that matches the shape of the formed object and applying temperature and pressure, or by placing the uncross-linked rubber in a mold that is larger than the shape of the formed object and applying temperature and pressure, and then cut or otherwise machined into the desired shape.

The fabrication method of the formed object includes the technique of layering sheets, filaments, and particles, however, in the cross-linking using a mold, it is difficult to maintain the fabricated shape, and it is also difficult to fabricate the formed object of cross-linked rubber with complex shapes. When cross-linking the formed object of uncross-linked rubber, it is necessary to apply pressure as well as temperature to the formed object in order to eliminate air bubbles contained within the formed object and air bubbles generated by the cross-linking reaction. For example, in PTL 1, calcium oxide is contained in the unvulcanized rubber composition to suppress bubbles, however in general, the strength properties of the vulcanized rubber are impaired when foreign substances such as calcium oxide is contained.

In the method of placing the uncross-linked rubber in a mold that matches the shape of the formed object and applying temperature and pressure, since the mold is required to match the shape of the formed object, it is necessary to remake or modify the mold anew even for small shape modifications.

In the method of placing the uncross-linked rubber in a mold that is larger than the shape of the formed object and applying temperature and pressure, and then cut or otherwise machined into the desired shape, the formed object of cross-linked rubber can be produced in advance with a mold of a larger shape than the formed object and machined later to accommodate small shape modifications without modifying the mold.

In addition, in case of having a complex shape that cannot be removed from the mold, it was difficult to make a formed product.

It is difficult to handle the calcium oxide used to control air bubbles because it reacts exothermically with water, and its addition to the formulation of the uncross-linked rubber can change the physical properties of the cross-linked rubber and may also impair the strength properties of the vulcanized rubber.

In contrast, according to the method for producing the cross-linked rubber of this disclosure, it is possible to provide a method for producing a cross-linked rubber for the additively fabricated object that can be easily produced with good dimensional accuracy and simplicity, even using a general-purpose uncross-linked rubber composition.

The following is a detailed description of the method for producing the cross-linked rubber according to this disclosure.

The method for producing the cross-linked rubber according to this disclosure includes, heating said additively fabricated object of uncross-linked rubber within the range not exceeding the saturated vapor pressure by controlling the temperature and pressure of said liquid, heating said additively fabricated object of uncross-linked rubber within the range not exceeding the saturated vapor pressure by controlling the temperature and pressure of said liquid, obtaining the equivalent cross-linking amounts at regular intervals from the start of heating using the following Formula (1), accumulating them and calculating the cumulative cross-linking degree, and stopping the cross-linking reaction when the cross-linking degree of said additively fabricated object of cross-linked rubber reaches the required cross-linking degree. The termination of the cross-linking reaction is judged, for example, by stopping the heating and cooling as necessary, when the temperature of the additively fabricated object of rubber or the temperature in the container containing the additively fabricated object of rubber falls, for example to or below 80°C, or substantially below the cross-linking temperature.

For the range of the pressure and temperature not exceeding the saturated vapor pressure, the saturated vapor pressure curve of the liquid can be referred. The heating for the additively fabricated object of cross-linked rubber is preferably performed using a sealed container that can be pressurized and heated. Specifically, the liquid may be placed in the sealed container, the additively fabricated object of uncross-linked rubber may be placed in the container to be immersed, and then the liquid may be heated and pressurized. For heating the liquid, the liquid inside the sealed container may be heated by gas or liquid from outside the container, or a heating source, heat exchanger, or other devices may be placed inside the container to heat the liquid from inside. At this time, the liquid may be stirred inside the container. By checking the temperature inside the container, it is possible to verify whether the liquid is at the prescribed temperature.

The temperature range is not restricted and may be set appropriately depending on the type of rubber components that constitutes the object to be cross-linked. Specifically, the temperature may be set at or above the cross-linking reaction initiation temperature of the rubber components that constitutes the object to be cross-linked and at or below the temperature at which the rubber surface is scorched or the rubber components are destroyed, as appropriate. For example, the temperature may be set appropriately between 100°C and 200°C.

The pressure range is not restricted and may be set appropriately depending on the type of rubber components that constitutes the object to be cross-linked. Specifically, the pressure may be set at or above the minimum pressure at which the generation of bubbles inside the rubber components that constitutes the object to be cross-linked is suppressed. For example, it can be set as appropriate at 0.3 MPa or higher, preferably at 1 MPa or higher, and more preferably at 1.5 MPa or higher. The upper limit of the pressure can be set as appropriate within the range where the container does not break or rupture. For example, it can be set as appropriate at or below 5 MPa, and preferably at or below 3 MPa.

For the sealed container, it is preferable to replace the atmosphere with an inert gas such as nitrogen gas after the liquid and the additively fabricated object of cross-linked rubber are placed in it. It is also preferable to keep an inert gas atmosphere in the sealed container during cross-linking of the additively fabricated object of cross-linked rubber. In other words, instead of completely filling the inside of the container with liquid, it is preferable to simultaneously fill the container with a certain amount of inert gas. This pressure of the inert gas can be pre-set or changed during heating to provide pressure to the liquid. Here, the pressure inside the container can be checked by placing a pressure gauge inside the container or in the piping connected to the gas.

Even when pressurized, only the hydrostatic pressure component is applied to the additively fabricated object inside the container, so the pressure can be applied equally to complex shapes including small parts such as edges, and hollow parts that penetrate to the outside, etc.

Next, this method obtains the equivalent cross-linking amounts at regular intervals from the start of heating using the following Formula (1), accumulates them and calculates the cumulative cross-linking degree, and stops the cross-linking reaction when the cross-linking degree of the additively fabricated object of cross-linked rubber reaches the required cross-linking degree.

[Math. 3]

$$U = \sum_{i=1}^{n} \left\{ e^{-\frac{E}{R}\left(\frac{1}{T} - \frac{1}{T_0}\right)} \right\} \cdot \left(\frac{t^i}{t_0}\right) \qquad (1)$$

In the Formula (1);

U is the equivalent cross-linking amount,
E is the activation energy (kcal/mol),
R is the gas constant ($1.987 \times 10^{-3}$ kcal/mod • deg),
T is the cross-linking temperature (K),
$T_0$ is the reference temperature (K),
$t_0$ is the time of optimum cross-linking reaction point, which was measured and determined in advance at the reference temperature $T_0$ (Sec),
t' is the cross-linking time at the i-th interval to be accumulated (Sec).

Specifically, this method obtains the equivalent cross-linking amounts U for i = 1, i = 2, i = 3, ... at regular intervals from the start of heating using the following Formula (1), accumulates the obtained equivalent cross-linking amounts U, and calculating the cumulative cross-linking degree. The time interval for obtaining the equivalent cross-linking amounts U is not limited, however, is usually 10 to 120 seconds.

The cross-linking degree of the additively fabricated object of cross-linked rubber can be determined, for example, according to the method described in JIS K 6300-2 (2001) (Rubber, unvulcanized - Physical property - Part 2: Determination of cure characteristics with oscillating curemeters). The U = 1 is obtained when the amount of cross-linking reaction becomes equal to that at the time of optimum vulcanizing reaction point $t_0$, which was measured and determined in advance at temperature $T_0$, and this is the point in time when the cross-linking degree of the additively fabricated object of cross-linked rubber has reached the required cross-linking degree. The time of optimum cross-linking reaction point may be determined by any method, for example, by the torsional vibration vulcanization test described in JIS K 6300-2 (2001). If the method of producing cross-linked rubber includes the pre-heating and cooling processes described below, the time of optimum cross-linking reaction point is preferably determined by also considering the progress of the cross-linking reaction in the pre-heating and cooling processes.

(Liquid)

The type of liquid is not restricted, and for example, water, ethylene glycol, fluorocarbon, etc. may be used. Only one type of liquid may be used, or two or more types of liquid may be used. Among these, water is preferred for its effectiveness in cleaning the additively fabricated object of cross-linked rubber, ease of replacement, and inexpensiveness.

(Additively fabricated object of uncross-linked rubber)

The additively fabricated object of uncross-linked rubber is an additively fabricated object of uncross-linked rubber composition.

In this disclosure, the component composition of the uncross-linked rubber composition is not particularly limited, and a general-purpose uncross-linked rubber composition may be used, or a uncross-linked rubber composition tailored for various applications such as for tires, hoses, seismic isolation rubber, anti-vibration rubber, and crawlers may be used.

The uncross-linked rubber composition usually contains rubber components, fillers, cross-linking agents, and various additives.

The rubber components can be either diene rubber or non-diene rubber, and the diene rubber such as natural rubber (NR), styrene-butadiene copolymer rubber (SBR), and polybutadiene rubber (BR) are usually used. Only one rubber component may be used, or two or more of rubber components may be used.

The fillers generally include reinforcing fillers such as carbon black and silica to increase the durability, abrasion resistance, and other functions of the cross-linked rubbers. Only one type of filler may be used, or two or more types of filler may be used.

The cross-linking agents include, for example, sulfur cross-linking agent, organic peroxide cross-linking agent, acid cross-linking agent, polyamine cross-linking agent, resin cross-linking agent, sulfur compound cross-linking agent, and oxime-nitrosamine cross-linking agent. The sulfur cross-linking agent (vulcanizing agent) are usually used.

The various additives are the one commonly used in the rubber industry, such as softeners, stearic acid, anti-aging agents, zinc oxide, vulcanization accelerators, etc.

The additively fabricated object of uncross-linked rubber can be obtained as follows.

An uncross-linked rubber composition containing the rubber components, fillers, cross-linking agents, etc. already mentioned is kneaded by a Banbury mixer, etc. and processed into sheets, threads, particles, slurries, etc. The resulting uncross-linked rubber material can be additively fabricated as indicated in the Additive Manufacturing classification by the ASTM (American Society for Testing and Materials). This ASTM classification includes Sheet Lamination, Material Extrusion, Directed Energy Deposition, Powder Bed Fusion, Binder Jetting, and Material Jetting, etc.

[Sheet processing]

For example, as shown in the ASTM classification "Sheet Lamination", a sheet-like additively fabricated object of cross-linked rubber is obtained by stacking plates of uncross-linked rubber with different widths in a staircase-like manner.

From the viewpoint of creating more accurate shapes of formed objects, it is better to stack four or more layers of sheet in the maximum thickness section. From the viewpoint of uniform physical properties in the thickness direction and workability, the thickness of the sheet in each layer is preferably 0.2 mm or more.

[Thread processing]

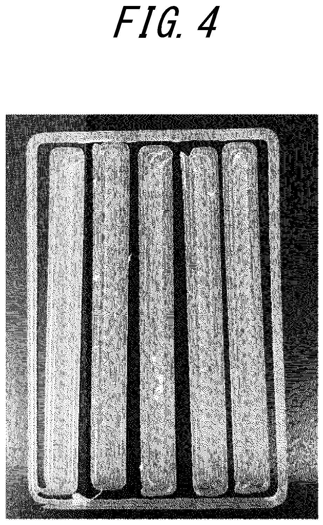

For example, the kneaded, uncross-linked rubber composition may be softened by imparting temperature to it and then additively fabricated as indicated in the ASTM classification "Thermal Fusion Lamination" while making it into a thread shape. Specifically, for example, it can be additively fabricated as illustrated in FIG.4. The uncross-linked rubber composition may be threaded and then heated again for lamination.

From the viewpoint of creating more precise shapes of formed objects, the cross-sectional area of the thread-like uncross-linked rubber is preferably small, 1 mm$^2$ or less. From the viewpoint of uniform physical properties in the depth direction viewed from the surface of the thread-like uncross-linked rubber and workability, the cross-sectional area of the thread-like uncross-linked rubber is preferably 0.2 mm$^2$ or more.

[Granular processing]

In the granular processing, for example, the kneaded uncross-linked rubber composition is first processed into granules. The resulting granular uncross-linked rubber is additively fabricated by "powder sintering" by laser, electron beam, etc.; "binder jet"; "energy lamination", etc. as indicated in the ASTM classification, to obtain an additively fabricated object of uncross-linked rubber.

From the viewpoint of creating more accurate shapes of formed objects, the volume of the granular uncross-linked rubber is preferably small, preferably 0.523 mm$^3$ or less. From the viewpoint of uniform physical properties in the depth direction viewed from the surface of the granular uncross-linked rubber, the volume of the granular uncross-linked rubber is preferably $4\times10^{-3}$ mm$^3$ or more.

[Slurry processing]

In the slurry processing, for example, the kneaded uncross-linked rubber composition is first processed into a slurry. The resulting slurry of the uncross-linked rubber is additively fabricated by "material jetting" as indicated in the ASTM classification to obtain an additively fabricated object of cross-linked rubber.

[Pre-heating process]

The method of producing a cross-linked rubber according to this disclosure preferably includes a pre-heating process in which the additively fabricated object of uncross-linked rubber is heated at or below the boiling point of the liquid under pressure of 1.1 MPa or more in advance.

The fact that the producing method for cross-linked rubber according to this disclosure includes the pre-heating process allows the cross-linking reaction of the additively fabricated object of uncross-linked rubber to proceed efficiently.

The pressure condition for the pre-heating process is preferably 1.2 to 1.8 MPa, and more preferably 1.3 to 1.7 MPa.

The temperature condition for the pre-heating process is at or below the boiling point of the liquid, preferably 65 to 90°C, and more preferably 70 to 85°C.

In the method for producing a cross-linked rubber according to this disclosure, it is preferable, after heating the additively fabricated object of uncross-linked rubber, to stop the cross-linking reaction by cooling the liquid to at or below 100°C without generating liquid vapor.

This cooling process allows the cross-linking reaction of the additively fabricated object of uncross-linked rubber to proceed gently.

[Additively fabricated object of crosslinked rubber]

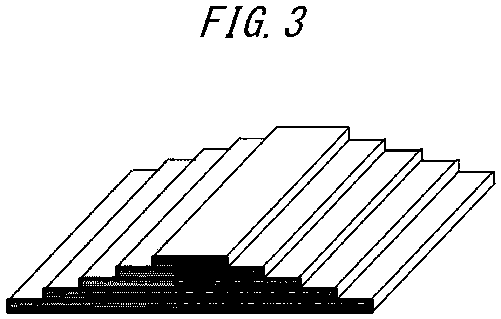

The additively fabricated object of crosslinked rubber produced by the method for producing a vulcanized rubber according to this disclosure has excellent dimensional accuracy. More specifically, for example, in the case of the sheet-like additively fabricated object illustrated in FIG.3, the dimensional changes in width, thickness, and length of each layer can be kept within 10%, and the staircase angle retention can be kept within 10% (within ±9 degrees for 90 degrees).

EXAMPLES

This disclosure will be described in more detail below with examples, but these examples are intended to illustrate this disclosure and are not limiting it in any way.

(Fabrication of additively fabricated object of cross-linked rubber)

An uncross-linked rubber composition was prepared by mixing 50 parts carbon black to 100 parts natural rubber (NR) and kneading it with a Banbury mixer. Using a roll, the uncross-linked rubber composition was made into a sheet with a wide of 100 mm, a length of 90 mm, and a thickness of 2 mm. The longitudinal direction is perpendicular to the roll. Five plates of uncross-linked rubber with different widths were prepared from this plate and stacked to form the staircase illustrated in FIG. 3.

The required cross-linking degree for this additively fabricated object of uncross-linked rubber was determined based on JIS K 6300-2 (2001), and it was found that heating at 145°C for 660 seconds was appropriate.

(Container setting)

As the sealed container, a three-mouth pressure-resistant cylindrical container made of SUS 316, with an inner diameter of 30 mm and an inner length of 200 mm was prepared. Water was used as the liquid. Water was placed into the container to a depth of 100 mm, and the remaining space was filled with nitrogen gas.

A thermocouple was inserted from the top of the container and the water temperature was recorded with a logger. Another hole in the top of the container was connected, by a T connector, to a nitrogen gas tank and a release valve with a pressure gauge.

(Pre-heating process)

The additively fabricated object of uncross-linked rubber was fixed with a jig and immersed in water in a container, and the container was filled with nitrogen gas at 3 MPa and checked the tightness thereof for any gas leaks. The internal pressure was set at 1.5 MPa to achieve an internal pressure of 2 MPa at 145°C. The container was placed in an oil bath set at 80°C and the temperature was raised to 180°C. The internal temperature reached 80°C in about 9 minutes after starting the temperature rise.

Note, the temperature of the thermometer and the pressure of the pressure gauge were recorded by loggers from the pre-heating process to cooling.

[Example 1]

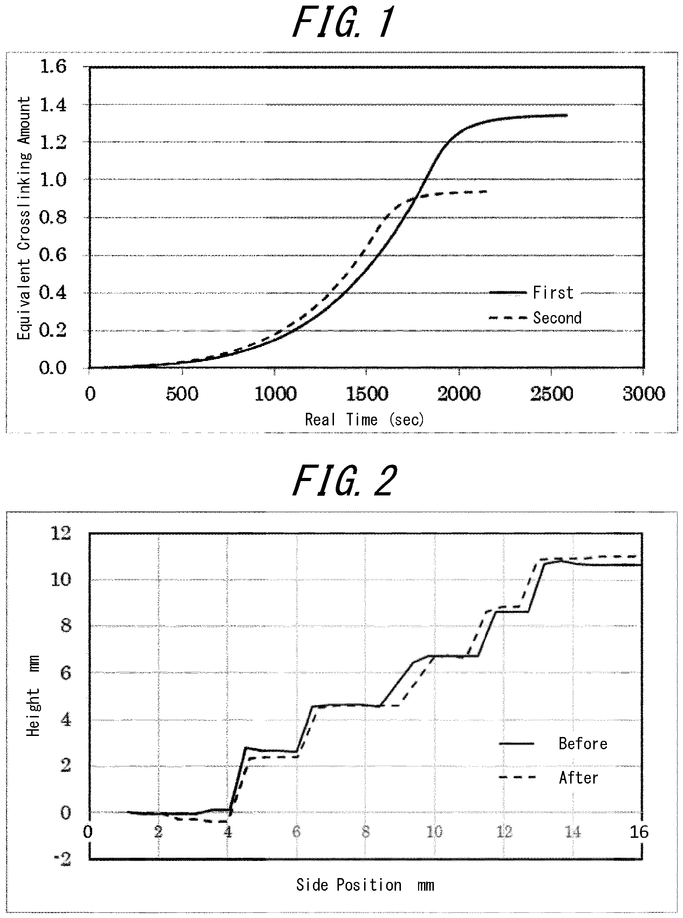

From the point in the pre-heating process when the temperature in the container reached 80°C, the thermometer value was measured every 30 seconds, the equivalent cross-linking amount U was calculated using the Formula (1), and each calculated value was summed up. Heating was stopped when the equivalent cross-linking amount reached 0.97, close to the target of 1.0. The equivalent cross-linking amount corresponding to the measurement time is illustrated in FIG. 1. In FIG. 1, the "First" indicated by the solid line is the equivalent cross-linking amount in Example 1.

The container was removed from the oil bath and cooled with two industrial fans. When the internal temperature of the container dropped below 100°C, nitrogen gas was released, and air cooling was continued. When the internal temperature reached about 60°C, the lid was opened, and the sample was removed. The equivalent cross-linking amount up to 80°C was 1.35.

[Example 2]

Fabrication of the additively fabricated object of non-crosslinked rubber, container setup, and preheating process were performed as in Example 1.

From the point in the pre-heating process when the temperature in the container reached 80°C, the thermometer value was measured every 30 seconds, and the calculation of the equivalent cross-linking amount U was started. Considering the cooling time, heating was stopped immediately after the internal temperature reached 145°C. The equivalent cross-linking amount corresponding to the measurement time is indicated in FIG. 1. In FIG. 1, the "Second" indicated by the dashed line is the equivalent cross-linking amount in Example 2.

Cooling was performed as in Example 1. The equivalent cross-linking amount up to 80°C was 0.94.

<Evaluation>

Visual observation of the additively fabricated object of uncross-linked rubber of Examples 1 and 2 side by side with the additively fabricated object of cross-linked rubber thereof showed that the original shape was largely maintained. To evaluate the dimensional accuracy in more quantitative detail, the edge shapes of the additively fabricated object of uncross-linked rubber of Example 1 and the additively fabricated object of cross-linked rubber thereof were checked by the laser shape measurement ("Q4-240" produced by Quelltech). The longitudinal edges of the fabricated object were laser irradiated in the longitudinal direction to check for differences in the staircase shape of the fabricated object. The result is indicated in FIG. 2. The two lines almost overlap, indicating that there is little dimensional change between the uncross-linked and cross-linked states.

**Claims**

1. A method for producing a cross-linked rubber, in which an additively fabricated object of uncross-linked rubber is heated in a liquid to produce an additively fabricated object of cross-linked rubber, wherein the method includes, heating said additively fabricated object of uncross-linked rubber within the range not exceeding the saturated vapor pressure by controlling the temperature and pressure of said liquid, obtaining the equivalent cross-linking amounts at regular intervals from the start of heating using the following Formula (1), accumulating them and calculating the cumulative cross-linking degree, and stopping the cross-linking reaction when the cross-linking degree of said additively fabricated object of cross-linked rubber reaches the required cross-linking degree,
[Math. 1]

$$U = \sum_{i=1}^{n} \left\{ e^{-\frac{E}{R}\left(\frac{1}{T} - \frac{1}{T_0}\right)} \right\} \cdot \left(\frac{t^i}{t_0}\right) \qquad (1)$$

in the Formula (1);

U is the equivalent cross-linking amount,
E is the activation energy (kcal/mol),
R is the gas constant ($1.987 \times 10^{-3}$ kcal/mod• deg),
T is the cross-linking temperature (K),
$T_0$ is the reference temperature (K),
$t_0$ is the time of optimum cross-linking reaction point, which was measured and determined in advance at the reference temperature $T_0$ (Sec),
t' is the cross-linking time at the i-th interval to be accumulated (Sec).

2. The method for producing a cross-linked rubber according to claim 1, including a pre-heating process in which said additively fabricated object of uncross-linked rubber is heated at or below the boiling point of said liquid under pressure of 1.1 MPa or more in advance.

3. The method for producing a cross-linked rubber according to claim 1 or 2, wherein said liquid is water.

**Patentansprüche**

1. Verfahren zur Herstellung eines vernetzten Kautschuks, bei dem ein additiv gefertigter Gegenstand aus nichtvernetztem Kautschuk in einer Flüssigkeit erwärmt wird, um einen additiv gefertigten Gegenstand aus vernetztem Kautschuk herzustellen, wobei das Verfahren Folgendes einschließt:
Erwärmen des additiv gefertigten Gegenstandes aus nichtvernetztem Kautschuk innerhalb eines Bereichs, der den Sättigungsdampfdruck nicht überschreitet, durch Regeln der Temperatur und des Drucks der Flüssigkeit, Gewinnen der äquivalenten Vernetzungsausmaße in regelmäßigen Intervallen von dem Beginn des Erwärmens an unter Verwendung der folgenden Formel (1), Kumulieren derselben und Berechnen des kumulierten Vernetzungsgrades und Anhalten der Vernetzungsreaktion, wenn der Vernetzungsgrad des additiv gefertigten Gegenstandes aus vernetztem Kautschuk den erforderlichen Vernetzungsgrad erreicht,
[Math. 1]

$$U = \sum_{i=1}^{n} \left\{ e^{-\frac{E}{R}\left(\frac{1}{T} - \frac{1}{T_0}\right)} \right\} \cdot \left(\frac{t^i}{t_0}\right) \qquad (1)$$

in der Formel (1):

ist U das äquivalente Vernetzungsausmaß,
ist E die Aktivierungsenergie (kcal/mol),
ist R die Gaskonstante ($1,987 \times 10^{-3}$ kcal/mod · deg),
ist T die Vernetzungstemperatur (K),
ist $T_0$ die Referenztemperatur (K),
ist $t_0$ die Zeit des optimalen Vernetzungsreaktionspunktes, die im Voraus bei der Referenztemperatur $T_0$ gemessen und bestimmt wurde (s),
ist t' die Vernetzungszeit bei dem i-ten zu kumulierenden Intervall (s).

2. Verfahren zur Herstellung eines vernetzten Kautschuks nach Anspruch 1, das einen Vorwärmungsprozess einschließt, bei dem der additiv gefertigte Gegenstand aus nichtvernetztem Kautschuk bei oder unter dem Siedepunkt der Flüssigkeit unter einem Druck von 1,1 MPa oder mehr im Voraus erwärmt wird.

3. Verfahren zur Herstellung eines vernetzten Kautschuks nach Anspruch 1 oder 2, wobei die Flüssigkeit Wasser ist.

**Revendications**

1. Procédé de production d'un caoutchouc réticulé, dans lequel un objet de fabrication additive en caoutchouc non réticulé est chauffé dans un liquide pour produire un objet de fabrication additive de caoutchouc réticulé, dans lequel le procédé inclut :
le chauffage dudit objet de fabrication additive en caoutchouc non réticulé dans une plage n'excédant pas la pression de vapeur saturée en régulant la température et la pression dudit liquide, l'obtention des quantités équivalentes de réticulation à intervalles réguliers à partir du début du chauffage en utilisant la formule suivante (1), l'accumulation de celles-ci et le calcul du degré de réticulation cumulé, et l'arrêt de la réaction de réticulation lorsque le degré de réticulation dudit objet de fabrication additive en caoutchouc réticulé atteint le degré de réticulation requis,
[Formule 1]

$$U = \sum_{i=1}^{n} \left\{ e^{-\frac{E}{R}\left(\frac{1}{T} - \frac{1}{T_0}\right)} \right\} \cdot \left(\frac{t^i}{t_0}\right) \qquad (1)$$

dans la formule (1) :

U est la quantité équivalente de réticulation,
E est l'énergie d'activation (kcal/mol),
R est la constante des gaz (1,987 x $10^{-3}$ kcal/mol · deg),
T est la température de réticulation (K),
$T_0$ est la température de référence (K),
$t_0$ est le temps du moment de réaction de réticulation optimal, qui a été mesuré et déterminé au préalable à la température de référence $T_0$ (s),
t' est le temps de réticulation à l'i-ème intervalle à accumuler (s).

2. Procédé de production d'un caoutchouc réticulé selon la revendication 1, incluant un processus de préchauffage, dans lequel ledit objet de fabrication additive en caoutchouc non réticulé est chauffé au préalable au point d'ébullition dudit liquide ou au-dessus de celui-ci sous une pression de 1,1 MPa ou plus.

3. Procédé de production d'un caoutchouc réticulé selon la revendication 1 ou la revendication 2, dans lequel ledit liquide est de l'eau.

## FIG. 1

## FIG. 2

# *FIG. 3*

FIG. 4

**EP 4 328 009 B1**

**Patent documents cited in the description**

- JP 2019019324 A

- JP 2003531038 A